# EUROPEAN PATENT APPLICATION

(11) **EP 0 780 609 A2**
(43) Date of publication of application: **25.06.1997**
(21) Application number: 96118019.7
(22) Date of filing: 11.11.1996
(51) Int. Cl.: F16K 1/228

(54) **Butterfly valve having a collapsible seal**

(30) Priority: 21.11.1995 US 560751
(71) Applicant: AlliedSignal Incorporated, Morristown, New Jersey 07962 (US)
(72) Inventor: Ball, Larry K., Alliedsignal Inc., Morristown, NJ 07962 (US); Dumas, Steven B., Alliedsignal Inc., Morristown, NJ 07962 (US); Jorgensen, Daniel R., Alliedsignal Inc., Morristown, NJ 07962 (US); Osborn, Rondel W., Alliedsignal Inc., Morristown, NJ 07962 (US); Palmer, Daniel A., Alliedsignal Inc., Morristown, NJ 07962 (US); Schipae, Richard J., Alliedsignal Inc., Morristown, NJ 07962 (US); Tervo, John N., Alliedsignal Inc., Morristown, NJ 07962 (US)
(74) Representative: Poidatz, Emmanuel

(57) **Abstract**

A valve comprises a valve member in a duct having a collapsible seal. The collapsible seal includes a sealing ring around the valve member. The seal may be pressurized to contract the sealing to engage the valve member. Conversely, a control vent releases the pressure to expand the sealing ring away from the valve member. To open the valve, the seal expands into the wall of the duct to eliminate friction and initiate fluid flow around the perimeter of the valve member. To close the valve, the valve member is pivoted to the closed position and the seal is activated to engage the perimeter of the valve member. The seal is further configured to withstand high temperature applications.

## Description

### BACKGROUND OF THE INVENTION

### 1. Field of the Invention

The invention relates to flow control valves, and more particularly, to seals for butterfly valves.

### 2. Description of the Related Art

The valve member of a butterfly valve must achieve a sealing tight fit with the walls of the duct. Typically, the plate-like butterfly valve member includes a seal member at its outer periphery. This seal member, such as a piston ring type, o-ring, or lip seal, is resiliently and sealingly engageable with the duct wall in the closed position of the valve member.

To open the butterfly valve, an initial torque must be applied to the valve member to overcome the friction with the seal and "crack open" the valve member. Similarly, to close the valve member, a final torque must be applied to the valve member to overcome the friction of the seal. Not only does this require added torque from the actuator, but contributes to rapid degradation of the seal due to wear.

A collapsible seal eliminates the problem of wear by moving the seal away from the valve member before the valve member moves to the open position. Similarly, the valve member is first rotated to the closed position, and only then does the seal engage the valve member. Consequently, friction between the seal and the valve member is substantially eliminated. Collapsible seals, however, typically require plastics and other materials that cannot withstand high temperatures.

In view of the deficiencies of the known butterfly valve art, it is an object of this invention to reduce or eliminate the opposing torque which must be overcome to move the valve member of a butterfly valve. In addition, it is an object of the invention to provide a seal suitable for high temperature applications.

### SUMMARY OF THE INVENTION

A butterfly valve according to various aspects of the present invention provides a substantially frictionless seal suitable for high temperature applications. In particular, an exemplary embodiment of a butterfly valve includes a collapsible seal which engages the perimeter of the valve member in the closed position. When the valve is open, the seal expands into the wall of the duct. Thus, the seal may move away from the valve member to substantially eliminate friction with the valve member. Further, the seal may be comprised of components suitable for high temperature applications. Consequently, the integrity of the seal remains intact even in a high temperature environment.

### BRIEF DESCRIPTION OF THE DRAWING

The subject matter of the invention is particularly pointed out and distinctly claimed in the concluding portion of the specification. The invention, however, both as to organization and method of operation, may best be understood by reference to the following description taken in conjunction with the claims and the accompanying drawing, in which:
**Figure 1** illustrates a longitudinal cross-section of a butterfly valve in the closed position;
**Figure 2** illustrates a downstream elevational view of the butterfly valve of Figure 1;
**Figure 3** illustrates a longitudinal cross-section of the butterfly valve of Figure 1 in the open position;
**Figures 4A-C** illustrate longitudinal cross-sections of the sealing ring in relation to the valve member of the butterfly valve of Figure 1 in the closed and open positions, respectively, and having alternative seals;
**Figure 4D** illustrates a longitudinal cross-section of the sealing ring in relation to the valve member of the butterfly valve of Figure 1 in the closed position prior to engagement of the sealing ring;
**Figure 5** is a transverse cross-section of the duct of the butterfly valve of Figure 1; and
**Figures 6A-B** are transverse cross-sections of the duct of Figure 5 with the sealing ring in the closed and open positions, respectively.

### DETAILED DESCRIPTION OF PREFERRED EXEMPLARY EMBODIMENTS

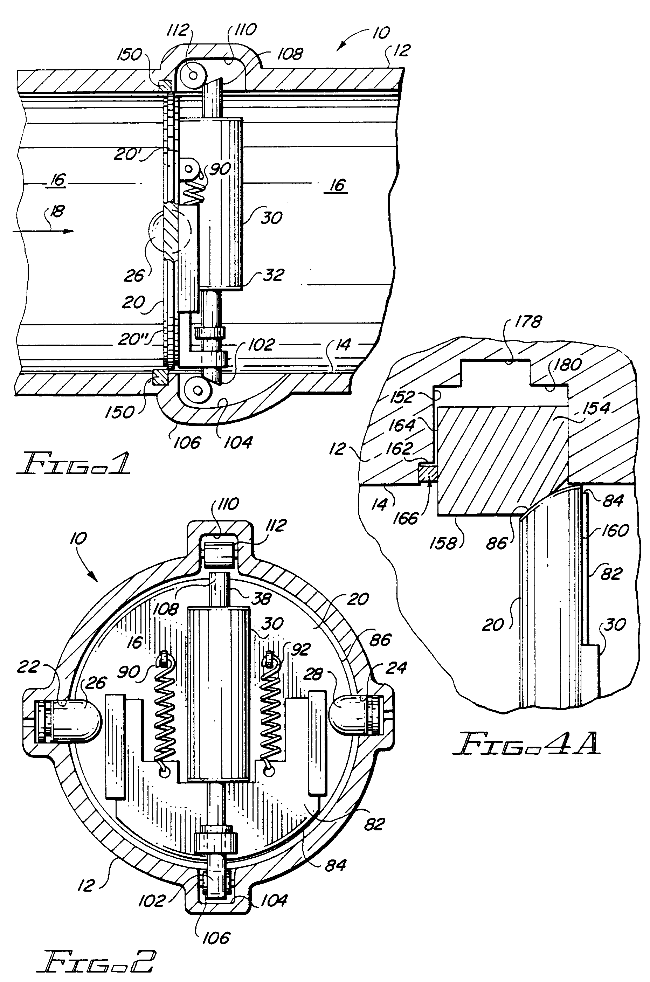

Referring now to Figures 1, 2, and 3, a valve 10 according to various aspects of the present invention comprises: a flow path 16 defined by an interior surface 14; a valve member 20 disposed within interior surface 14; and a collapsible seal 150 disposed within interior surface 14 and around valve member 20. Flow path 16 is suitably defined by an elongate circumferentially extending wall, such as the interior surface 14 of a duct 12 or pipe. Interior surface 14 bounds flow path 16 in which a fluid may flow, as depicted by arrow 18.

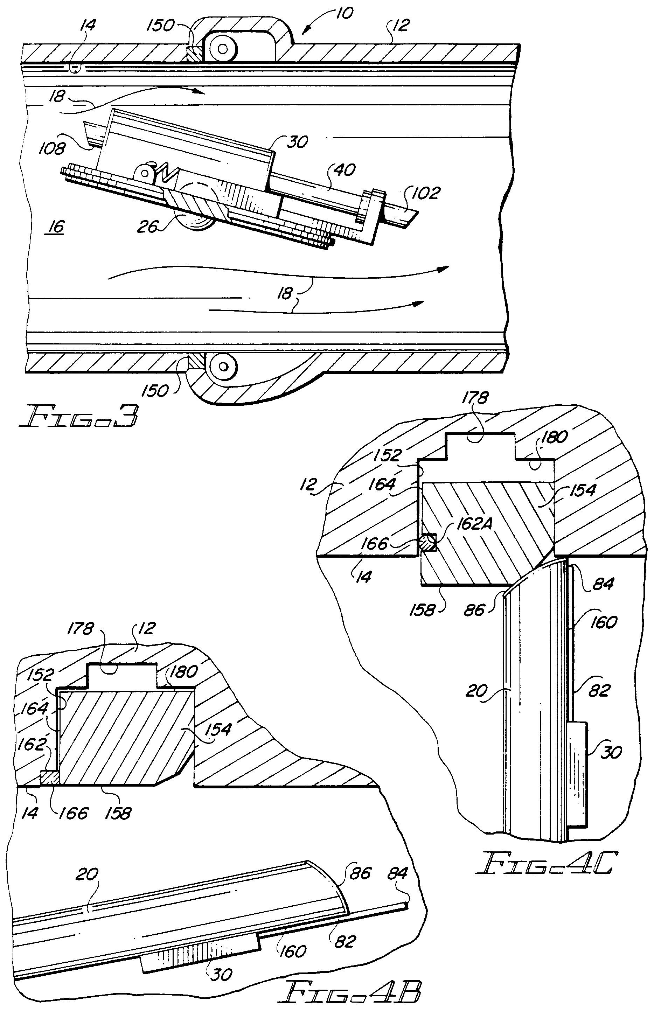

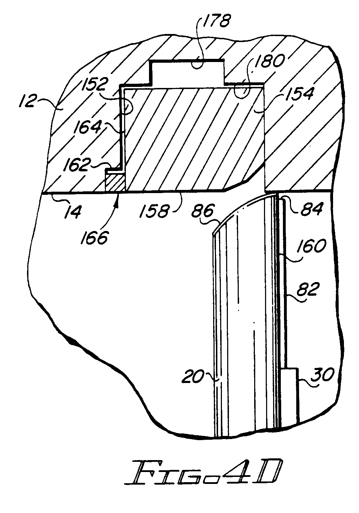

Valve member 20 is disposed within flow path 16 in duct 12 to facilitate fluid flow control. Valve member 20 comprises any suitable valve member for selectably inhibiting fluid flow. Valve member 20 includes a rigid, plate-like member conforming to the shape of duct 12. Valve member 20 is preferably relatively thin to present a narrow profile to fluid flow when valve 10 is open. Valve member 20 is movably mounted within duct 12 so that, in a first position, valve member 20 is disposed transversely across flow path 16 to form a barrier across the duct to inhibit fluid flow (Figure 1). Valve member 20 pivots about an axis to a second position, approximately parallel to flow path, to facilitate the flow of fluid through duct 12 (Figure 3). Preferably, static fluid forces in flow path 16 bias valve member 20 towards the closed position.

Referring now to Figure 2, interior surface 14 of duct 12 defines a pair of transversely aligned inwardly opening sockets 22, 24, while valve member 20 includes a pair of trunnions 26, 28 sealingly and freely rotatably received in sockets 22, 24. Consequently, valve member 20 may rotate substantially freely on the axis defined by sockets 22, 24 and trunnions 26, 28. It should be noted that, although the axis of rotation shown in Figures 1 and 3 is orthogonal to flow path, the axis of rotation may be disposed at an angle across duct 12 so that a socket 22 and a trunnion 26 are positioned upstream from the opposing socket 24 and trunnion 28.

When valve 10 is in the closed position, collapsible seal 150 engages outer perimeter 86 of valve member 20 to substantially seal therebetween (Figure 1). After valve member 20 closes, collapsible seal 150 is secured around valve member's 20 outer perimeter 86. Conversely, prior to opening valve member 20, collapsible seal 150 expands away from the perimeter 86 of valve member 20 to facilitate free movement of valve member 20 (Figure 3). The delay between the expansion of seal 150 and the opening of valve member 20 removes the friction of valve member 20 against seal 150. Similarly, the delay between closure of valve member 20 and the contraction of the seal 150 around valve member 20 substantially eliminates the friction between valve member 20 and seal 150, thus facilitating closure.

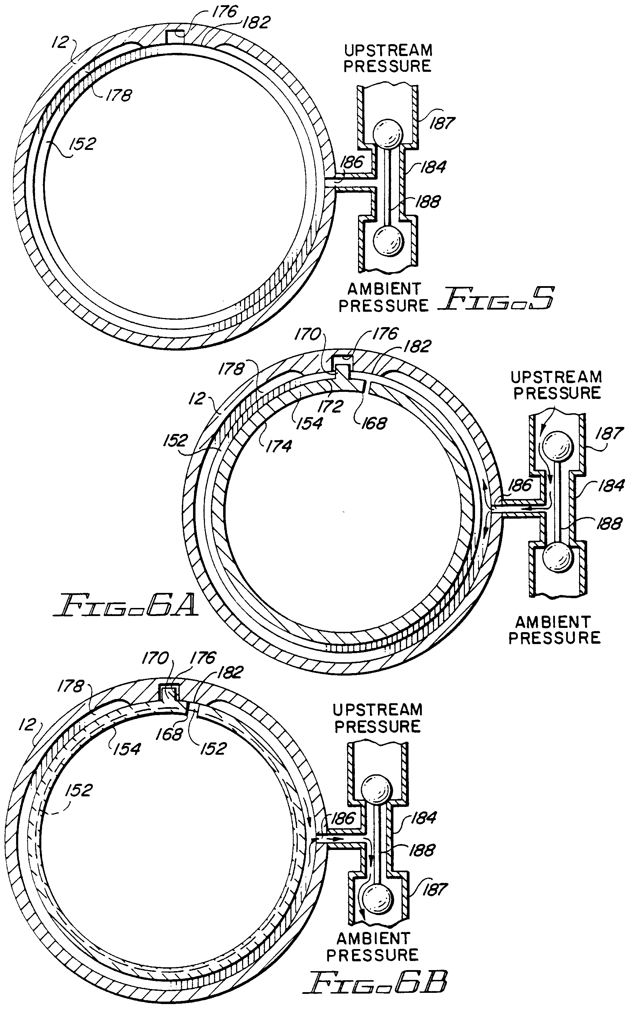

Referring now to Figures 4A-B, interior surface 14 of duct 12 defines a circumferential sealing member groove 152 around the outer perimeter 86 of valve member 20. Sealing member groove 152 is sized to securely receive a sealing ring 154 so that sealing ring 154 is movable radially with respect to the longitudinal axis of duct 12. Sealing ring 154 has a member conformed to the shape of interior surface 14 and sealing member groove 152, *e.g.* a ring. Sealing ring 154 comprises any suitable material for forming a seal with valve member 20, especially in high temperature conditions, *e.g.* a high cobalt alloy. The sealing ring 154 is movably seated within sealing member groove 152. In the contracted position, the sealing ring 154 has a cross-sectional height sufficient to contact the outer perimeter 86 of valve member 20 while remaining seated within sealing member groove 152. In the expanded position, sealing ring 154 may partially extend beyond interior surface 14 into flow path 16, or its cross-sectional height may be slightly less than the depth of sealing member groove 152 so that an interior surface 158 of sealing ring 154 is flush with or below interior surface 14 of duct 12. In addition, the cross-sectional width of sealing ring 154 is slightly less than the width of sealing member groove 152 to facilitate radial movement of sealing ring 154.

The interior surface 158 of sealing ring 154 is configured to mate with outer perimeter surface 86 of valve member 20. For example, a portion of interior surface 158 may be beveled to conform with the shape of the outer perimeter 86 of valve member 20. Conformed interior surface 158 provides a contact surface between sealing ring 154 and valve member 20. In addition, sealing ring 154 is positioned, and interior surface 158 is conformed, so that sealing ring 154 contacts valve member 20 away from the downstream side 160 of sealing ring 154 and nearer the center of sealing ring 154.

Referring to Figures 4A-B, duct 12 includes an annular seal groove 162 formed in one of the side walls defining the sealing member groove 152. A seal member, such as a wire or O-ring 166, is mounted within seal groove 162 to form the seal between sealing ring 154 and sealing member groove 152. Preferably, the seal member has a square cross-section, and is composed of a material capable of withstanding high temperatures without deterioration. Alternatively, sealing ring 154 may include an annular seal groove 162A formed on a side surface of sealing ring 154 (Figure 4C). Seal groove 162A is located sufficiently away from interior surface 158 of sealing ring 154 so that wire 166 continuously remains in contact with sealing member groove 152 regardless of the radial position of sealing ring 154. A second seal groove and wire seal may also be incorporated into the downstream side of sealing ring 154 to enhance the seal between flow path 16 and sealing member groove 152 (not shown).

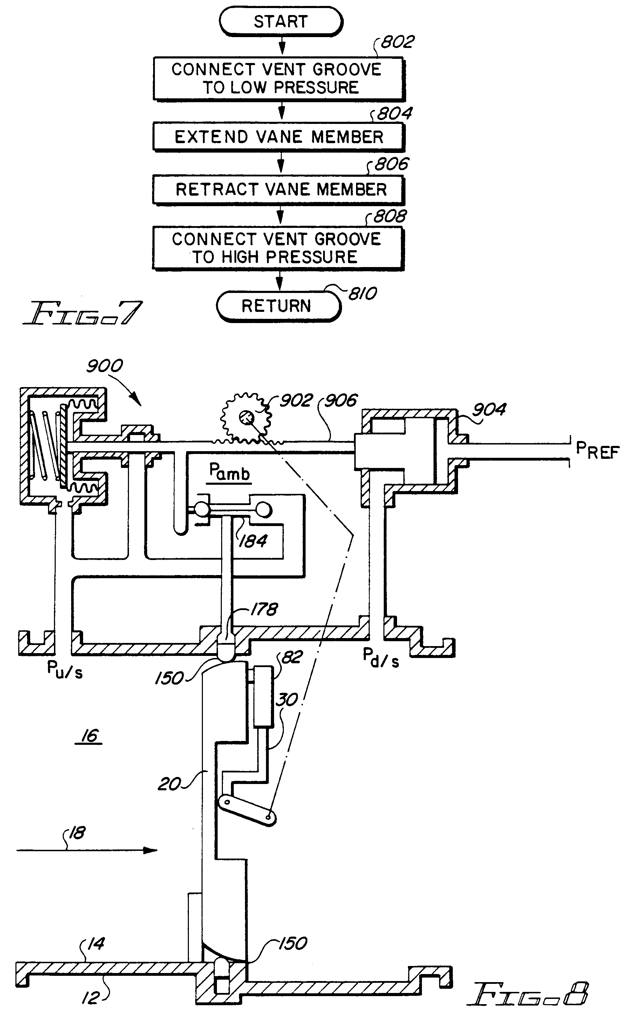

Sealing ring 154 is pliant to facilitate contraction to secure sealing ring 154 around valve member 20 and expansion away from valve member 20. As shown in Figures 4A-B and 5, sealing ring 154 includes a narrow butt gap 168 to permit expansion of sealing ring 154 in response to a force applied to interior surface 158 of sealing ring 154. Sealing ring 154 is biased to contract, *i.e.,* unless sealing ring 154 is forced outward, it contracts around perimeter 86 of valve member 20.

In addition, sealing ring 154 includes a positioning peg 170 rigidly attached to an outer surface 172 of sealing ring 154. Interior surface 174 of sealing member groove 152 forms a peg recess 176 for receiving positioning peg 170. Positioning peg 170 is received within peg recess 176 to maintain the orientation of sealing ring 154 with respect to duct 12. Peg recess 176 is sized to snugly receive positioning peg 170 of sealing ring 154, and is deep enough to facilitate movement of positioning peg 170 radially from the longitudinal axis of duct 12 as sealing ring 154 contracts and expands to engage and disengage valve member 20.

Referring again to Figures 5 and 6A-B, interior surface 14 of duct 12 also defines a vent groove 178 formed in a surface 180 of sealing member groove 152 parallel to the longitudinal axis of duct 12 and concentrically with sealing member groove 152. Vent groove 178 is suitably narrower than the cross-sectional width of sealing ring 154 so that sealing ring 154 cannot enter vent groove 178. Vent groove 178 may be circumferential around sealing member groove 152. Preferably, however, vent groove 178 is not completely circumferential, and instead circumscribes less than the full circumference of sealing member groove 152 to form a gap 182 in the circumference of vent groove 178. Peg recess 176 is formed in the surface of duct 12 in vent groove gap 182. Peg 170 and butt gap 168 are positioned on sealing ring 154 so that when positioning peg 170 is received in peg recess 176, butt gap 168 is positioned adjacent vent groove gap 182. Thus, when butt gap 168 is expanded to expand seal 150, fluid within duct 12 is prevented from leaking into vent groove 178 through butt gap 168 and is contained in flow path 16 (see Figure 6B).

Vent groove 178 may be selectably vented to a relatively low pressure, or pressurized with valve inlet pressure, for example through a control vent 184. Vent groove 178 has a hole 186 formed therein connected to control vent 184. Control vent 184 is operated in conjunction with an actuator (described below) to expand and activate seal 150. Control vent 184 includes any suitable mechanism for controlling the pressure in vent groove 178. Suitable logic for operating control vent 184 in conjunction with actuator 30 is disclosed in U.S. Patent Application Serial No. 08/560,260, filed November 21, 1995 by Larry K. Ball, Richard J. Schipae, Steven B. Dumas, Daniel A. Palmer, John N. Tervo and Daniel R. Jorgensen, entitled METHOD AND APPARATUS FOR CONTROLLING A COLLAPSIBLE SEAL FOR A BUTTERFLY VALVE, which is hereby incorporated by reference.

Control vent 184 is a two-stage valve for alternately connecting vent groove 178 to a relatively high pressure and a relatively low pressure. For example, control vent 184 has a three-connection fixture 187 and a sealing element 188. A first connection of fixture 187 is suitably connected to vent groove 178 through hole 186. A second connection of fixture 187 is connected to a relatively high pressure, such as the upstream pressure in duct 12. A third connection is connected to a relatively low pressure, such as ambient pressure. Sealing element 188 is disposed between the second and third connections to alternately connect the first connection, *i.e.,* vent groove 178, to either the second or third connection, *i.e.,* upstream or ambient pressure, and seal the first connection from the other.

When sealing element 188 is in a first position (Figure 6A), vent groove 178 is subjected to upstream pressure from control vent 184, activating seal 150 to engage valve member 20 as described below. Conversely, when sealing element 188 is in a second position (Figure 6B), vent groove 178 is vented to a relatively low pressure through control vent 184, for example, ambient pressure or the downstream pressure in flow path 16, *i.e.,* downstream from valve member 20.

After seal 150 expands radially outward away from valve member 20, fluid pressure and flow forces acting on valve member 20 may be used to reduce or eliminate opposing torque and to effect pivotal movement of valve member 20. Valve member 20 includes an actuator 30 (Figures 4A-B) for opening and closing valve member 20. Actuator 30 may be any actuator suitable for selectably pivoting valve member 20 between the open and closed positions. For example, actuator 30 may be a pneumatically controlled actuator for controlling the position of valve member 20. Such an actuator is described in U.S. Patent Number 4,964,431 to Ball, *et al.,* issued October 23, 1990. In the preferred embodiment, actuator 30 controls the extension and withdrawal of a plate-like partially arcuate vane member 82 in sliding juxtaposition with the downstream face of valve member 20. Vane member 82 defines an arcuate edge 84 which, in the first position of vane member 82, is disposed slightly inwardly of outer peripheral surface of valve member 20 (Figure 4A).

A collapsible seal according to various aspects of the present invention may be implemented with any type of valve. In addition, a collapsible seal in accordance with various aspects of the invention may be implemented in conjunction with any suitable actuator which changes the position of valve member 20. For illustrative purposes, however, the present invention is described in conjunction with a balanced torque butterfly valve having an extendable vane actuator. In operation of butterfly valve 10, pressurized fluid in flow path 16 applies static fluid pressure forces to a pair of wings 20', 20'' formed on valve member 20. Because vane member 82 is fully withdrawn, wings 20', 20'' are of equal area and disposed on opposite sides of the pivot axis defined by trunnions 26, 28. Because these static fluid pressure forces are applied to equal areas on each side of the pivot axis of valve member 20, valve member 20 is stable in the closed position as depicted in Figure 1.

When valve member 20 is in the closed position (Figure 4D), vent groove 178 is pressurized to contract sealing ring 154 around valve member 20. For example, control vent 184 may be connected to upstream pressure such that fluid flows into vent groove 178 (depicted by the flow arrows in Figure 6A) until the pressure in vent groove 178 is substantially equal to the pressure in flow path 16. Due to the location of the sealing ring 154 and valve member 20, the effective force exerted on the exterior surface of sealing ring 154 due to its exposure to upstream pressure in vent groove 178 is greater than the effective force exerted on the interior surface of sealing ring 154 exposed to upstream pressure in flow path 16. Consequently, the radially inward force exerted by the pressure in vent groove 178 upon the exterior surface of sealing ring 154 is greater than the radially outward force exerted by the pressure in flow path 16 upon the interior surface of sealing ring 154. As a result, sealing ring 154 is forced tightly against perimeter 86 of valve member 20.

Alternatively, the connection of control vent 184 to upstream pressure may be omitted, so that control vent 184 only connects or disconnects vent groove 178 to ambient pressure. When control vent 184 disconnects vent groove 178 from ambient pressure, leakage of a small amount of fluid from duct 16 (e.g., past wire 166) into vent groove 178 suitably pressurizes vent groove 178. The seal formed between valve member 20 and interior surface 14 of duct 12 and the seal formed between sealing ring 154 and sealing member groove 152 are preferably sufficient to facilitate such pressurization of vent groove 178.

To open butterfly valve 10, seal 150 is expanded away from the perimeter 86 of valve member 20 before valve member 20 is rotated to the open position. Seal 150 is expanded by switching the position of sealing element 188 so that vent groove 178 is vented to a lower pressure, such as ambient pressure (Figure 6B). Depressurization of vent groove 178 reduces the inward force exerted upon the outer surface of sealing ring 154. Any leakage of upstream fluid into vent groove 178 is negligible in comparison to the net fluid flow vented to ambient pressure. As the inward force declines, it eventually drops below the outward force exerted upon the interior surface of sealing ring 154, causing sealing ring 154 to expand. Consequently, the interior surface of sealing ring 154 disengages outer perimeter 86 of valve member 20 and slides back into sealing member groove 152, effectively sealing vent groove 178 from fluid passing through valve 20 (described above in connection with vent groove gap 182).

Expanding seal 150 removes the frictional force from valve member 20, and further provides an initial fluid flow around the perimeter 86 of valve member 20. To pivot valve member 20 to the open position, actuator 30 extends vane member 20 beyond perimeter 86 of valve member 20 and into the fluid flow (Figure 4B). During this phase of valve operation, valve member 20 is subject not only to static fluid pressure forces, but to dynamic fluid flow forces as well. Extension of vane member 82 at its edge outwardly beyond peripheral surface 86 of valve member 20 effectively enlarges trailing wing 20'', while the area of leading wing 20' remains constant. In other words, the silhouette of valve member 20 is enlarged at trailing wing 20''. Thus, valve member 20 may be considered to act somewhat like a weather vane turning toward or away from the oncoming fluid flow in response to the fluid dynamic forces effective thereon. As a result, valve member 20 pivots to the open position.

In order to progressively close valve member 20 from its open position of Figure 4B toward its closed position of Figure 4A, vane member 82 is progressively retracted, and valve member 20 pivots toward its closed position in response to dynamic fluid flow forces. When vane member 82 is fully retracted, valve member 20 pivots to the closed position of Figure 4A.

After valve member 20 moves to the fully closed position, seal 150 is pressurized to secure sealing ring 154 to the perimeter 86 of valve member 20. Sealing member 188 is positioned so that vent groove 178 is no longer vented to ambient pressure, and is connected instead to upstream pressure. Pressurized fluid in flow path 16 flows through control vent 184 and into vent groove 178. As the pressure in vent groove 178 increases, the inward force against the outer perimeter of sealing ring 154 increases and eventually exceeds the outward force exerted by the fluid in flow path 16 upstream of valve member 20. As a result, sealing ring 154 contracts and engages outer perimeter 86 of valve member 20 to form the seal.

In some applications or configurations, added torque may be required to open and close valve 10. A mechanical actuator may be provided to supply added torque to initially open valve member 20. For example, referring to Figures 1-3, actuator 30 may include a housing 32 having two oppositely extending piston members 38, 40, which expand and contract in opposition in response to pneumatic controls. First piston member 38 and second piston member 40 include cam-surfaces or wedge-surfaces 102, 108. Each wedge surface 102, 108 engages a recess 104, 110 formed in interior surface 14 of duct 12. First wedge-surface 102 is disposed opposite second wedge surface 108, and is engageable with a roller member 106 rotatably disposed in recess 104. Each recess 104, 110 is disposed downstream of valve member 20 when the latter is in the closed position, as depicted in Figure 1.

After seal 150 is expanded as described above, pneumatic controls provide pressurized fluid, such as air, to piston members 38, 40, so that first piston member 38 retracts fully before second piston member 40 begins to extend. Consequently, first wedge surface 108 is first retracted to disengage from first roller member 112. Subsequently, second piston member 40 begins to extend, which forces second wedge-surface 102 against second roller member 106 to effect a counter clockwise opening torque on valve member 20. This opening torque is sufficient to pivot the valve member 20 through an initial opening angular increment toward the open position, *i.e.,* to "crack open" valve, and allow the beginning of fluid flow in flow path 16.

Subsequent to this initial opening movement of valve member 20, further inflow of pressurized fluid through actuator 30 causes second piston member 40 to further extend, causing vane member 82 to move outwardly against a pair of springs 90, 92. As described above, fluid dynamic forces effectively force valve member 20 to the open position. Referring now to Figure 3, vane member 82 is almost completely extended outwardly of trailing wing 20'' of valve member 20. Consequently, freely-pivotal valve member 20 has taken an angular position in the duct allowing substantially full fluid flow therein.

To progressively close valve member 20 from its open position of Figure 3 toward its closed position of Figure 1, the pneumatic pressure is progressively relieved from actuator 30. Consequently, vane member 82 is retracted progressively, and valve member 20 pivots toward the closed position in response to dynamic fluid flow forces. When the fluid pressure is completely relieved, valve member 20 may be close to, but not completely in, the closed position of Figure 1. Second piston member 40 is completely retracted, and first piston member 38 is partially extended so that first wedge surface 108 engages first roller member 112. In order to completely close valve member 20, pressurized fluid is provided to a second port of actuator 30. This pressurized fluid extends first piston member 38 so that first wedge surface 108 engages first roller member 112, which provides a clockwise closing torque to valve member 20. This closing torque is sufficient to move valve member 20 to its fully closed position. At this time, valve member 20 and sealing ring 154 are positioned substantially as shown in Figure 4D. Seal 150 is then activated as described above to secure the seal around valve member 20.

In sum, collapsible seal 150 facilitates sealing of butterfly valve 10 in the closed position. Collapsible seal 150 may be disengaged from valve member 20 before moving valve member 20 to minimize friction between valve member 20 and seal 150, thus reducing wear. Likewise, collapsible seal 150 engages valve member 20 after valve member 20 has been rotated to the closed position, similarly minimizing friction and reducing wear on seal 150. In addition, seal 150 may be composed of temperature tolerant materials to withstand extreme temperatures to which valve 10 may be subjected.

While the principles of the invention have now been made clear in illustrative embodiments, there will be immediately obvious to those skilled in the art many modifications of structure, arrangements, proportions, the elements, materials and components, used in the practice of the invention which are particularly adapted for a specific environment and operating requirements without departing from those principles.

## Claims

1. A butterfly valve, comprising:
a duct defining a flow path for a fluid;
a valve member pivotably disposed within said duct, wherein said valve member is selectably moveable between a closed position and an open position;
a sealing member movably disposed between said valve member and said duct, said sealing member comprising a sealing ring having a butt gap formed therein; and
means for biasing said sealing member against said valve member when said valve member is in the closed position and to withdraw said sealing member from said valve member when said valve member is in the open position.

2. The butterfly valve of claim 1, further comprising a valve actuator configured to move said valve member between said open and closed positions.

3. The butterfly valve of claim 2, wherein said actuator includes a vane member disposed on said valve member and moveable into said flow path of said duct.

4. The butterfly valve of claim 1, wherein said duct includes a sealing member groove, and wherein said sealing member is movably disposed within said sealing member groove.

5. The butterfly valve of claim 4, wherein said duct further includes a vent groove adjacent said sealing member groove, said vent groove being selectably pressurized to bias said sealing member toward said valve member when said valve member is in said closed position.

6. The butterfly valve of claim 5, wherein said vent groove is selectably pressurized by fluid from said flow path.

7. The butterfly valve of claim 5, further including a control vent connected to said vent groove, said control vent configured to selectably pressurize and depressurize said vent groove.

8. The butterfly valve of claim 1, wherein said sealing ring includes a sealing surface abutting said valve member when said valve member is in the closed position, and wherein said sealing surface conforms at least partially to the contour of said valve member.

9. The butterfly valve of claim 1, wherein said valve member is configured to be biased toward said closed position by said fluid flowing in said flow path.

10. The butterfly valve of claim 5, wherein said vent groove includes a gap adjacent said butt gap.

11. The butterfly valve of claim 7, wherein said control vent depressurizes said vent groove to an ambient pressure outside of said duct.

12. The butterfly valve of claim 7, wherein said control vent depressurizes said vent groove to a downstream pressure in said flow path in said duct.

13. A butterfly valve, comprising:
a fluid flow structure having an inner surface and a longitudinal axis, wherein said inner surface includes:
a circumferential seal member groove formed in said inner surface;
a vent valve connected between said seal member groove and a relatively low pressure;
a valve member pivotably mounted within said flow structure; and
a sealing member slidably seated within said seal member groove so that said sealing member is slidable radially with respect to said longitudinal axis, and having an outer surface adjacent said seal member groove, and an inner surface adjacent said valve member, said sealing member comprising a sealing ring having a butt gap formed therein.

14. The butterfly valve of claim 13, wherein said flow structure further includes a vent cavity formed in said seal member groove and connected to said vent valve.

15. The butterfly valve of claim 14, wherein said vent cavity is selectably pressurized by fluid from within said flow structure.

16. The butterfly valve of claim 13, wherein said sealing member inner surface conforms at least partially to the contour of said valve member.

17. The butterfly valve of claim 13, wherein said valve member is configured to be biased toward said closed position by said fluid flowing in said flow structure.

18. A butterfly valve, comprising:
a duct defining a flow path for a fluid having a fluid pressure, said duct having a circumferential seal member groove formed therein;
a sealing ring disposed within said seal member groove, said sealing ring having an exterior surface located within said seal member groove and an interior surface exposed to said flow path;
a valve member pivotably disposed within said duct, wherein said valve member is selectably moveable between a closed position and an open position;
a vent valve, fluidly coupled to said seal member groove, for substantially establishing said fluid pressure within said seal member groove;
wherein said valve member and said sealing ring are configured such that, when said valve member is in said closed position, a first force upon said exterior surface exerted by said fluid pressure in said seal member groove exceeds a second force upon said interior surface exerted by said fluid pressure in said flow path.
